# EUROPÄISCHE PATENTSCHRIFT

(11) **EP 0 531 478 B1**
(45) Veröffentlichungstag und Bekanntmachung des Hinweises auf die Patenterteilung: **26.06.1996**
(21) Anmeldenummer: 92906593.6
(22) Anmeldetag: 19.03.1992
(51) Int. Cl.: C04B 11/036, B01J 8/26

(54) **VERFAHREN ZUM KALZINIEREN VON FEUCHTEM GIPS**
PROCESS FOR CALCINING MOIST GYPSUM
PROCEDE DE CALCINATION DE PLATRE HUMIDE

(30) Priorität: 25.03.1991 DE 4109743
(43) Veröffentlichungstag der Anmeldung: 17.03.1993
(73) Patentinhaber: SULZER-ESCHER WYSS GMBH, D-88212 Ravensburg (DE); ProMineral Gesellschaft zur Verwendung von Mineralstoffen mbH, D-45141 Essen (DE)
(72) Erfinder: KRÖHL, Paul, D-7980 Ravensburg (DE); LINDNER, Heiko, D-4630 Bochum 6 (DE)
(74) Vertreter: Dipl.-Phys.Dr. Manitz Dipl.-Ing. Finsterwald Dipl.-Ing. Grämkow Dipl.Chem.Dr. Heyn Dipl.Phys. Rotermund Morgan, B.Sc.(Phys.)
(86) Internationale Anmeldenummer: EP9200607
(87) Internationale Veröffentlichungsnummer: WO9216468

(56) Entgegenhaltungen:
- EP-A- 0 331 294
- CH-A- 153 755
- FR-A- 2 311 764
- US-A- 3 281 508

## Beschreibung

Die Erfindung betrifft ein Verfahren zur thermischen Behandlung von feuchten Hydraten der im Oberbegriff des Patentanspruchs 1 angegebenen Art.

Ein solches Verfahren ist z.B. das sog. Kalzinieren von feuchtem Gips. Feuchter Gips, d.h. Kalziumsulfat-Dihydrat, wozu auch Feuchtgips aus REA (Rauchgasentschwefelungs-Anlagen) gehört, kann bei Temperaturen bis zu 90°C oberflächengetrocknet werden, ohne das Kristallwasser zu entfernen. Bei Temperaturen bis etwa 145°C erfolgt der Entzug des Kristallwassers, die Entwässerung zum Halbhydrat. Je nach Wasserdampfpartialdruck entsteht dabei die Alpha- oder Beta-Modifikation des Halbhydrats. Oberhalb dieser Temperatur entstehen, je nach Temperaturniveau, durch vollständige Kristallwasserabgabe die Anhydrit-Modifikationen, beginnend mit dem sog. A III Gips, einer sehr reaktiven Komponente mit kurzer Abbindezeit, gefolgt von reaktionsträgen, schwerlöslichen A II s und dem inerten A II u. Diese Unterschiede im Reaktionsverhalten werden auf die durch die thermische Behandlung veränderte Oberflächenbeschaffenheit zurückgeführt.

Um einen kalzinierten Gips mit konstanter und/oder reiner Phasenzusammensetzung zu erhalten, ist es daher wichtig, das Temperaturprofil bei der Herstellung genau steuern zu können. Es darf keine überhitzungen und Inhomogenitäten bei der thermischen Behandlung geben, die bei einzelnen Partikeln des Materials zu unerwünschten Phasenumwandlungen führen. Dies gilt für alle thermischen Schritte, also auch für die Trocknung.

Es gibt derzeit kein Verfahren, bei dem die o.g. Maximen wirklich erfüllt werden können. Bekannte Verfahren weisen getrennte Trocknungs- und Kalzinierungsstufen auf. Für die Trocknungsstufe werden Stromrohre oder Kombinationen aus beheizten Mischern und Stromrohren verwendet, die mit Rauchgasen bzw. mit indirekt erhitzten Gasen von über 200°C betrieben werden. Für eingesetzte Kontaktflächenbeheizung kommen darüber hinaus übliche Wärmeträger, z.B. Öl oder Dampf, ab ca. 150°C zur Anwendung. Es kann nicht verhindert werden, daß das Material, zumindest partiell, durch zu langen Kontakt mit Heißgasströmen bzw. Heizflächen überhitzt wird und sich bereits hier bei der Trocknung unerwünschte Phasen, z.B. A III, A II bilden.

Für die Kalzinierung werden sog. Kocher, Trommeln, Drehrohre mit Heizflächen ("Dampfrohr") sowie diverse Ofentypen verwendet. Direktbefeuerte Trommeln und Öfen stammen aus konventioneller Gipsbrandtechnik und eignen sich nur für stückiges Gut.

Kocher und Dampfrohr werden mit fluidisierbarem Gipspulver (Granulat) beschickt, wie er auch aus den REAs anfällt.

Charakteristisch für die erwähnten Apparate ist entweder die direkte Befeuerung mit Heißgasen (Rauchgase bzw. Luft) von in der Regel über 400°C und/oder die unvollständige Fluidisierung im Bereich von Heizflächen. Dadurch kommt es ebenso wie bei den Trocknern zu lokaler Überhitzung und unkontrollierter Bildung von Mehrphasengips. Darüber hinaus sind Rauchgase nicht inert, und es kann keine kontrollierte Atmosphäre (z.B. H₂O-Partialdruck) eingestellt werden. Diese Nachteile der Kalzinatoren sind hinreichend bekannt und so Gegenstand von Verbesserungsvorschlägen. In der Praxis gleicht man diese Verfahrensnachteile aus, indem man durch unterschiedliche Zugabe von Zuschlagstoffen sog. Stellmittel, bzw. durch zusätzliche Verfahrensschritte (Mahlen, Kühlen) die Produkteigenschaften nachträglich beeinflußt.

Die bekannten Vorschläge zielen darauf ab, den Rauchgasen die schädliche Übertemperatur durch vorgeschalteten indirekten Wärmeaustausch zu nehmen, Fließbettapparate zur Intensivierung und Homogenisierung der Wärmeübertragung einzusetzen sowie Rauchgase nicht mit dem Produkt in Berührung kommen zu lassen.

So wird in der FR-PS 1 338 126 ein mit Heißluft betriebener Fließbettapparat beschrieben, der jedoch die Fluidisierungsprobleme in der Aufgabezone nur unvollkommen mit einem Rührwerk lösen kann, wodurch wiederum die Gefahr lokaler Überhitzung besteht, und zwar insbesondere an den durch die Schicht führenden Rauchgaszügen. Diese Nachteile vermeidet das Verfahren gemäß DE-PS 37 21 421, ein Fließbett mit inerter Granulatfüllung, wie z.B. Sand und gasseitige Kreislaufschaltung. Die DE-PS 26 22 994 beschreibt einen Fließbettapparat, der die inhomogene Produktqualität durch Vergleichmäßigung der Verweilzeit mit Hilfe von Kammern zu verbessern sucht. Diesen Apparaten steht als Nachteil gegenüber, daß zur Erzielung einer hinreichenden Trocknungsleistung und eines Wirkungsgrades mit hohen Heißgastemperaturen gearbeitet werden muß - mit den bekannten Gefahren der Überhitzung.

In der GB 2 027 859 A wird ein dem Kocher ähnlicher Apparat angeboten, der die Rauchgase durch Wärmeaustauschflächen in der Produktschicht abkühlt, bevor sie zur (partiellen) Fluidisierung verwendet werden. Die DE-OS 37 38 301 greift dieses Prinzip des indirekten Wärmeaustausches auf. Darüber hinaus wird zur Fluidisierung indirekt erhitztes Heißgas, kein Rauchgas, verwendet und eine Homogenisierung der Verweilzeit durch unterschiedlich fluidisierte Kammern zu erreichen versucht. Auch bei diesen beiden Verfahren besteht die Gefahr der Überhitzung an den wärmeübertragenden Wänden, insbesondere bei partieller bzw. unterschiedlicher Fluidisierung. Darüber hinaus benötigen alle bislang beschriebenen Verfahren - mit Ausnahme des Granulatfließbettes (DE-PS 37 21 421) - ein konventionell getrocknetes und daher, wie oben erklärt, vorgeschädigtes Dihydrat-Pulver.

Es ist Aufgabe der Erfindung, das Verfahren zu thermischer Behandlung von feuchten Hydraten zu verbessern, um kontrollierbar zum gewünschten Ergebnis am Kristallwasserentzug zu kommen. Insbesondere soll sich kontrollierbar ein kalzinierter Gips mit konstanter und/oder reiner Phasenzusammensetzung herstellen lassen, bei welchem eine inhomogene Behandlung sich im weiten Umfang vermeiden läßt, was auch zu einem qualitätsmäßig homogenen Produkt führen soll.

Diese Aufgabe ist erfindungsgemäß beim Verfahren der eingangs beschriebenen Art durch im kennzeichnenden Teil des Patentanspruchs 1 angegebene Maßnahmen erfüllt.

In den Unteransprüchen sind vorteilhafte Ausführungsbeispiele des Verfahrens angegeben.

Mit diesem Verfahren werden die oben am Beispiel des Kalzinierens des feuchten Gipses erwähnten Nachteile vermieden. Sowohl Trocknung als auch Kristallwasserentzug erfolgen schonend in jeweils einem Fließbettapparat ohne jede, auch partielle Überhitzungsgefahr. Dies wird erreicht über eine vollständige, homogene Fluidisierung durch indirekt erhitztes Heißgas von niedriger Temperatur. Eine wesentliche Energiemenge wird durch Wärmetauscherflächen in der Fluidatschicht übertragen, welche durch Medien, wie z.B. Sattdampf, Wärmeträgeröl, ggfs. auf niedrigem Temperaturniveau vorzugsweise auf z.B. ca. 200°C beheizt werden. Eine besonders vorteilhafte konstruktive Gestaltung der Apparate mit rechteckiger Grundfläche gewährleistet ein enges Verweilzeitspektrum und ein ausgeprägtes Temperatur/Feuchte-Profil ohne Zuhilfenahme von unterschiedlich fluidisierten Kammern. Wegen der dadurch entstehenden vergleichsweise kalten Eintragszone und schonenden Erwärmung werden die Oberflächen-Eigenschaften der Kristalle günstig beeinflußt.

Das Fließbett besteht aus dem zu behandelnden Material, d.h. z.B. einem Gipsgranulat selbst. Es ist kein Hilfsmaterial bzw. mechanisches Hilfsmittel (wie Rührer) erforderlich. Die sichere Funktionsweise wird durch eine tiefe Schicht des Fließbetts, z.B. 0,5 bis 1,5 m, erreicht. Um auch hochfeuchte Hydrate trocknen zu können, ist es erforderlich, solche Materialien vor dem Eintrag in die Trocknungsstufe mit rückgeführtem oberflächentrockenem Material auf unkritische Feuchte zu mischen und die Aufgabe so zu verteilen, daß die spezifische Flächenbelastung die Fluidisierung nicht stört. Dies kann auf vorteilhafte Weise durch mehrere Aufgabestellen und/oder impulsbremsende oder verteilende Einbauten in der Schicht bewerkstelligt werden.

Die Regelung der Fließbett-Temperatur kann entweder über den Produktdurchsatz oder durch die Wärmeträgertemperatur vorgenommen werden. Im Falle des feuchten Gipses wird ein oberflächentrockenes Dihydrat mit vollem Kristallwassergehalt bei etwa 90°C Produkttemperatur erreicht. Mit diesem Ausgangsmaterial läßt sich im Kalzinator, dem zweiten Fließbettapparat, nur durch Variation der Austrittstemperatur, die in engen Grenzen konstant gehalten werden kann, jede gewünschte Gipsqualität herstellen: reines B-Halbhydrat, Zweiphasengipse mit Beta-Halbhydrat und je nach Temperatur unterschiedlichen Gehalten an A III sowie Mehrphasengipse mit Beta-Halbhydrat, A III- und A II-Anteilen bis hin zu reinem A II. In den Kalzinator integriert kann sich am Austragsende des Kalzinators eine Kühlzone befinden, die das Produkt auf moderate Temperaturen abkühlt und darüber hinaus die Möglichkeit bietet, durch gezielte Feuchtigkeitszugabe eine Arretisierung des Produkts durchzuführen.

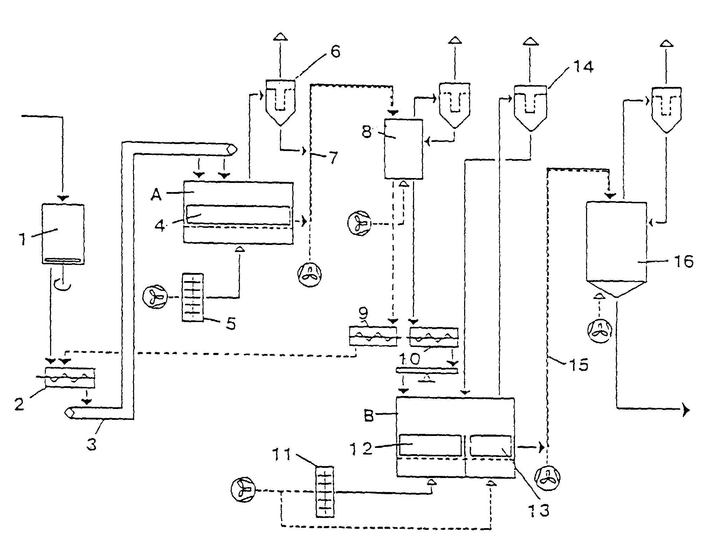

Im folgenden wird ein Ausführungsbeispiel des erfindungsgemäßen Verfahrens näher beschrieben und erklärt. Die Beschreibung bezieht sich auf die Zeichnung, in welcher eine Anlage zur Durchführung eines Ausführungsbeispiels, nämlich der Kalzinierung von feuchtem Gips, schematisch dargestellt ist.

Ein mechanisch entwässerter Feuchtgips aus einer REA wird aus dem Feuchtgutsilo 1 zusammen mit bereits oberflächen-getrocknetem Dihydrat in einem Mischer 2 auf unkritische Feuchte gemischt, so daß das Granulat gut fluidisierbar ist. Dieses wird über eine Fördereinrichtung 3 in einen ersten Fließbettapparat A, also in den Trockner, an zwei Stellen eingetragen. Die Fluidisierungsluft wird in einem Heizregister 5 auf 150°C erwärmt. Eine wesentliche Energiemenge wird der Fluidatschicht im Trockner A durch das Wärmetauschersystem 4 zugeführt. Die Abluft aus dem Trockner A wird im Filter bzw. Zyklon 6 entstaubt. Der Staub wird zusammen mit dem oberflächengetrockneten Dihydrat aus dem Trockner A pneumatisch über eine Leitung 7 in ein Trockengutsilo 8 gefördert. Eine Teilmenge wird über eine Förderschnecke 9 als Add-Back-Material zum Mischer 2 abgezweigt. Der Rest des Gutes aus dem Trockengutsilo gelangt über ein Dosiergerät 10 in einen zweiten Fließbettapparat, in den Kalzinator B. Die Fluidisierungsluft für den Heißteil des Fließbettapparats B wird durch ein Register 11 dem gewünschten Kalzinierungsgrad entsprechend erwärmt, die Fluidisierungsluft für eine in den Fließbettapparat B integrierte Kühlzone wird nicht erwärmt. Eine wesentliche Energiemenge wird in den Heißteil des Kalzinators B über ein Wärmetauschersystem 12 entsprechend dem gewünschten Kalzinierungsziel eingetragen, aus der Kühlzone wird die wesentliche Energiemenge über das Wärmetauschersystem 13 abgeführt. Die Abluft aus dem Kalzinator B wird im Zyklon 14 entstaubt, und der Staub wird - dem Kalzinierungsgrad des Materials entsprechend - an geeigneter Stelle in die Materialschicht zurückgegeben. Der fertig kalzinierte, gekühlte Gips gelangt über die Pneumatikleitungen 15 in ein Endproduktsilo 16 und kann von dort für eine Weiterverarbeitung abgenommen werden.

Daß das Ausführungsbeispiel für REA-Dihydrat konzipiert wurde, für das das Verfahren besonders geeignet ist, schließt die Anwendung des Verfahrens zur Kalzinierung von auch anderen Gips-Dihydrat-Gattungsformen nicht aus. Auch dabei kann das Verfahren mit den beschriebenen Vorteilen eingesetzt werden. Auch andere feuchte Hydrate lassen sich auf die erfindungsgemäß angegebene Weise mit erwähnten Vorteilen behandeln.

## Patentansprüche

1. Verfahren zur thermischen Behandlung von feuchten Hydraten, bei welchem das Material in einer ersten Vorrichtung getrocknet und in einer zweiten Vorrichtung der Kristallwassergehalt reduziert wird, indem entweder im Gasstrom ein Direktwärme- und -stoffaustausch mit dem Gasstrommedium erfolgt oder sowohl ein Direktwärme- und -stoffaustausch mit dem Gasstrommedium als auch ein indirekter Wärme- und Stoffaustausch mit einem Wärmeträgermedium erfolgt,
**dadurch gekennzeichnet**,
daß das Oberflächenwasser aus einer fluidisierten Schicht des Materials in einem ersten Fließbettapparat (A) mit eingebauten Wärmeaustauschflächen (4) auf niedrigem Temperaturniveau bei kontinuierlichem Vorgang verdampft wird und daß danach das Kristallwasser dem Material aus einer fluidisierten Schicht in einem zweiten Fließbettapparat (B) mit eingebauten Wärmeaustauschflächen (12) auf niedrigem Temperaturniveau bei kontinuierlichem Vorgang entzogen wird, wobei in beiden Apparaten (A und B) die einzusetzende Wärme einerseits mit dem Fluidisierungsgas von niedriger Temperatur, andererseits mehrheitlich über die Wärmeaustauschflächen (4 bzw. 12) eingetragen wird.

2. Verfahren nach Anspruch 1,
dadurch **gekennzeichnet**,
daß das zu behandelnde Material vor dem ersten Fließbettapparat (A) mechanisch entwässert wird und dem entwässerten Material ein Teil des in dem ersten Fließbettapparat (A) bereits behandelten Materials zugemischt wird, um ein in dem ersten Fließbettapparat (A) gut fluidisierbares Eintragsmaterial vorzubereiten.

3. Verfahren nach Anspruch 1 bzw. 2,
dadurch **gekennzeichnet**,
daß das Material in den ersten Fließbettapparat (A) an mehreren Stellen von oben in die Schicht eingetragen wird.

4. Verfahren nach Anspruch 1,
dadurch **gekennzeichnet**,
daß die verwendeten Fließbettapparate (A und B) jeweils einen rechteckigen Grundriß aufweisen, wodurch ein enges Verweilzeitspektrum der Materialteile erzielt wird.

5. Anwendung des Verfahrens nach Anspruch 1,
**gekennzeichnet** dadurch,
daß beim sog. Kalzinieren von feuchtem Gips, insbesondere REA-Gips, Gips-Dihydrat, der Kristallwassergehalt reduziert wird, wobei in dem ersten Fließbettapparat (A) nur das Oberflächenwasser verdampft wird.

6. Anwendung nach Anspruch 5,
dadurch **gekennzeichnet**,
daß in dem zweiten Fließbettapparat (B), der als Kalzinator dient, eine Abkühlung des Produkts vor seinem Austrag stattfindet, wozu vor der Produktaustragstelle eine integrierte Kühlzone vorgesehen ist, die zur Kühlung des kalzinierten Materials mit im Fließbett eingebauten Wärmeaustauschflächen (13) versehen ist.

## Claims

1. Method for the thermal treatment of moist hydrates, in which the material is dried in a first device and the content of water of crystallisation is reduced in a second device in which either a direct exchange of heat and material takes place in the gas stream with the medium of the gas stream, or both a direct exchange of heat and material takes place with the medium of the gas stream as well as an indirect exchange of heat and material with a heat transfer medium,
characterized in that
the surface water of a fluidized layer of the material is vaporized in a continuous process at a low temperature level in a first fluidized bed apparatus (A) with inbuilt heat exchange surfaces (4); and in that thereafter the water of crystalisation is withdrawn from the material in a continuous process at a low temperature level from a fluidized layer in a second fluidized bed apparatus (B) with inbuilt heat exchange surfaces (12), with the heat which is to be used in both apparatuses (A and B) being supplied on the one hand by the fluidizing gas of low temperature and on the other hand in the major part via the heat exchange surfaces (4 and 12 respectively).

2. Method in accordance with claim 1,
characterized in that
the material to be treated is mechanically dewatered prior to the first fluidized bed apparatus (A), and in that a part of the material already treated in the first fluidized bed apparatus (A) is mixed with the dewatered material in order to prepare an infeed material which is readily fluidizable in the first fluidized bed apparatus (A).

3. Method in accordance with claim 1 or claim 2,
characterized in that
the material in the first fluidized bed apparatus (A) is fed into the layer from above at a plurality of positions.

4. Method in accordance with claim 1,
characterized in that
the fluidized bed apparatuses (A and B) that are used each have a rectangular outline, whereby a narrow dwell time spectrum of the parts of the material is achieved.

5. Use of the method of claim 1,
characterized in that
during the so-called calcining of moist gypsum, in particular REA-gypsum (reactivated gypsum), gypsum dihydrate, the content of the water of crystallisation is reduced, with only the surface water being vaporized in the first fluidized bed apparatus (A).

6. Use in accordance with claim 5,
characterized in that
in the second fluidized bed apparatus (B), which serves a calcinator, a cooling of the product takes place before its discharge, with an integrated cooling zone being provided before the product discharge location and being provided with heat exchange surfaces (13) built into the fluidized bed for the cooling of the calcined material.

## Revendications

1. Procédé pour le traitement thermique d'hydrates humides, dans lequel le matériau est séché dans un premier dispositif, et dans lequel on réduit la teneur d'eau de cristallisation dans un second dispositif, soit par le fait qu'il s'effectue un échange direct de chaleur et de matière avec l'agent gazeux en écoulement, soit par le fait qu'il s'effectue aussi bien un échange direct de chaleur et de matière avec l'agent gazeux en écoulement qu'un échange indirect de chaleur et de matière avec un agent caloporteur, caractérisé en ce que l'eau superficielle se vaporise à un faible niveau de température en une opération continue hors d'une couche fluidifiée du matériau dans un premier appareil à lit fluidisé (A) comportant des surfaces d'échange de chaleur intégrées (4), et en ce qu'ensuite, l'eau de cristallisation est extraite à un faible niveau de température en une opération continue hors d'une couche fluidifiée du matériau dans un second appareil à lit fluidisé (B) comportant des surfaces d'échange de chaleur intégrées (12), la chaleur à appliquer dans les deux appareils (A et B) étant fournie d'une part avec le gaz de fluidification à faible température, et d'autre part en majorité via les surfaces d'échange de chaleur (4 ou 12).

2. Procédé selon la revendication 1, caractérisé en ce que le matériau à traiter est déshydraté mécaniquement avant le premier appareil à lit fluidisé (A), et en ce que l'on ajoute au matériau déshydraté une partie du matériau déjà traité dans le premier appareil à lit fluidisé (A), afin de préparer un matériau de départ facile à fluidiser dans le premier appareil à lit fluidisé (A).

3. Procédé selon l'une ou l'autre des revendications 1 et 2, caractérisé en ce que le matériau dans le premier appareil à lit fluidisé (A) est introduit à plusieurs emplacements depuis le haut dans la couche.

4. Procédé selon la revendication 1, caractérisé en ce que les appareils à lit fluidisé utilisés (A et B) présentent chacun une section rectangulaire, grâce à quoi on atteint un spectre de temps de séjour étroit des parties du matériau.

5. Application du procédé selon la revendication 1, caractérisée en ce que dans la calcination de plâtre humide, en particulier de plâtre REA, de dihydrate de plâtre, la teneur d'eau de cristallisation est réduite, en faisant vaporiser dans le premier appareil à lit fluidisé (A) seule l'eau superficielle.

6. Application selon la revendication 5, caractérisée en ce qu'on effectue, dans le second appareil à lit fluidisé (B) servant de calcinateur, un refroidissement du produit avant sa sortie, ce pourquoi est prévue avant l'emplacement de sortie du produit une zone de refroidissement intégrée qui est pourvue de surfaces d'échange de chaleur (13) intégrées dans le lit fluidisé pour le refroidissement du matériau calciné.
